# EUROPÄISCHE PATENTANMELDUNG

(11) **EP 1 371 999 A1**
(43) Veröffentlichungstag der Anmeldung: **17.12.2003**
(21) Anmeldenummer: 03010106.7
(22) Anmeldetag: 05.05.2003
(51) Int. Cl.: G01S 13/72, F41G 5/08

(54) **Verfahren zum Verfolgen eines Zieles und Zielverfolgungssystem**

(30) Priorität: 12.06.2002 CH 10012002
(71) Anmelder: OERLIKON CONTRAVES AG, 8050 Zürich (CH)
(72) Erfinder: Fischer, Pierre, 1201 Genève (CH)
(74) Vertreter: OK pat AG

(57) **Zusammenfassung**

Verfahren zum Verfolgen eines sich in einem Luftraum bewegenden Zieles (2) und Zielverfolgungssystem (10) zur Durchführung des Verfahrens. Ein Suchsensor (12) sucht einen Suchraum in einer ersten Taktrate (2π/ΔT1) ab und ermittelt Ziel-Informationen bezüglich einer vom Ziel (2) durchflogenen Spur (4). Berechnungsmittel (16) extrapolieren eine erwartete Flugbahn (6) aus den ermittelten Ziel-Informationen und stellen einem Folgesensor (14), der einen Folgeraum (15) abdeckt, Flugbahn-Daten, welche die erwartete Flugbahn (8) beschreiben, bereit, und zwar in einer zweiten Taktrate (2π/ΔT2), die höher ist als die erste Taktrate (2π/ΔT1). Wenn das Ziel (2) den Folgeraum (15) erreicht, wird der Folgesensor (14) anhand der bereitgestellten Flugbahn-Daten auf die erwartete Flugbahn (6) ausgerichtet, das Ziel (2) wird erfasst, sobald es durch den Folgesensor (14) erfassbar ist, und der Folgesensor (14) wird dem Ziel autark nachgeführt.

## Beschreibung

Die Erfindung betrifft ein Verfahren zum Verfolgen eines Zieles nach dem Anspruch 1 und ein Zielverfolgungssystem nach dem Anspruch 11.

Die Erfindung wird insbesondere, aber nicht ausschliesslich, im Zusammenhang mit dem Verfolgen von fliegenden Zielen, die zu bekämpfen sind, realisiert.

Herkömmlicherweise werden hierbei ein Suchsensor und ein Folgesensor eingesetzt. Der einen Suchraum abdeckende Suchsensor ist insbesondere dazu bestimmt, seinen Suchraum nach einem sich darin befindenden Ziel abzusuchen und hierbei Ziel-Information zu ermitteln, welche mindestens die Bewegung des Zieles beziehungsweise die Spur des Ziels in der Vergangenheit beschreiben. Meistens enthalten die Ziel-Informationen weitere Angaben über das Ziel, insbesondere über die Art des Zieles. Im Allgemeinen ist es zweckmässig, den Suchsensor so auszulegen, dass er mit grosser Reichweite und in einem grossem Winkelbereich, das heisst in einem weiten Suchraum, aktiv sein und detaillierte Ziel-Information liefern kann. Suchsensoren arbeiten meist mit relativ niedrigen Such-Taktraten. Aus den vom Suchsensor ermittelten Daten werden anschliessend extrapolativ Flugbahn-Daten bestimmt, welche die erwartete Bewegung des Zieles in der Zukunft beschreiben. Diese Flugbahn-Daten werden im Wesentlichen dazu benutzt, ein Grobrichten des Folgesensors durchzuführen. Häufig ist der Folgesensor so ausgelegt, dass er einen Folgeraum abdeckt, der eingeschränkter ist als der Suchraum des Suchsensors. Der Folgesensor muss, nach Übernahme des Zieles vom Suchsensor, in einer Anfangsphase seiner Aktivität, das Ziel erneut suchen, bevor er das Ziel erfassen, sich auf das Ziel ausrichten und dem Ziel folgen kann.

Nachteilig an diesem herkömmlichen Verfahren ist es vor Allem, dass die Übernahme des Zieles durch den Folgesensor nicht problemlos erfolgt. Besonders gravierend sind hierbei die Probleme, wenn der Folgesensor schlechtere Sichteigenschaften und/oder ein merklich kleineres Blickfeld und/oder eine andere Reichweite hat als der Suchsensor. Ein weiterer Nachteil liegt darin, dass die Such-Taktrate des Suchsensors, welche mindestens teilweise den Verfahrensablauf bestimmt, und mit welcher die Ziel-Flugbahn-Daten für den Folgesensor bereitgestellt werden, relativ niedrig ist, dass aber eine Erhöhung der Such-Taktrate nicht mit einem vertretbaren Aufwand realisierbar ist.

Mit der US-5,379,676 sind ein Verfahren und ein System für ein Feuerleitsystem einer manuell richtbaren Waffe bekanntgeworden. Vorgesehen ist dabei eine Sensorik mir einer Radareinrichtung und einem elektro-optischen Erkennungssystem in Form einer FLIR Kamera. Dieses Verfahren und dieses System sind im Aufbau verhältnismässig aufwendig, aber die damit erzielten Ergebnisse sind dennoch nicht befriedigend.

Es ist daher Aufgabe der Erfindung,
- ein verbessertes Verfahren der eingangs genannten Art vorzuschlagen; und
- ein Zielverfolgungssystem zur Durchführung dieses Verfahrens zu schaffen, mit welchen die Nachteile des Standes der Technik vermieden werden.

Die Lösung dieser Aufgabe erfolgt erfindungsgemäss
- für das Verfahren durch die Merkmale des Anspruchs 1; und
- für das Zielverfolgungssystem durch die Merkmale des Anspruchs 11.

Bevorzugte Weiterbildungen der Erfindung sind durch die jeweiligen abhängigen Ansprüche 2 bis 10 beziehungsweise 12 bis 30 definiert.

Das neue Verfahren läuft wie folgt ab: Der Suchsensor sucht, wie beim herkömmlichen Verfahren, seinen Suchraum nach einem Ziel ab. Dabei wird der Suchraum in mehreren Such-Durchgängen in einer ersten Taktrate beziehungsweise Such-Taktrate abgesucht. Die Such-Taktrate muss hierbei nicht genau konstant sein. Der Suchsensor ermittelt aus seinem Blickwinkel jeweils eine Bildfolge, wobei der zeitliche Abstand der Bilder einer Bildfolge durch die erste Taktrate beziehungsweise Such-Taktrate bestimmt ist. Unter Bildern sind in diesem Zusammenhang auch digitale Bilder zu verstehen. Bei rotierenden Suchsensoren entspricht die erste Taktrate beziehungsweise Such-Taktrate im Allgemeinen der Anzahl der Suchsensor-Rotationen pro Zeiteinheit. Befindet sich im Suchraum ein Ziel, so ermittelt der Suchsensor in seiner Such-Taktrate bei mehreren aufeinanderfolgenden Such-Durchgängen beziehungsweise Suchsensor-Rotationen Ziel-Informationen. Die Ziel-Informationen beschreiben, ggfs. unter Benutzung von Interpolationen, die vom Ziel schon durchflogene Spur. Die Ziel-Informationen können auch weitere Einzelheiten über das Ziel enthalten, zum Beispiel Angaben über den Ziel-Typ oder Ergebnisse einer Freund/Feind-Abfrage, durch welche erfasste Ziele als zu bekämpfende Objekte, also eigentliche Ziele, oder als freundliche Flugkörper qualifiziert werden. In Kenntnis der Ziel-Informationen von mehreren Such-Durchgängen, jedoch ggfs. nur unter Benutzung der Ziel-Informationen betreffend feindliche Ziele, werden durch Extrapolation eine erwartete Flugbahn beziehungsweise Flugbahn-Daten bereitgestellt, welche die Flugbahn beschreiben, der das Ziel vermutlich in der Zukunft folgen wird. Statt wie beim herkömmlichen Verfahren das Ziel direkt zu übernehmen, hierbei anfänglich das Ziel nochmals zu suchen und ihm autark zu folgen, folgt beim neuen Verfahren während einer Übergangsphase der Folgesensor dem Ziel nicht autark sondern fremdgesteuert. Die Fremdsteuerung erfolgt auf Grund der Flugbahn-Daten, die dem Folgesensor in einer zweiten Taktrate zur Verfügung gestellt werden, die höher ist als die erste Taktrate beziehungsweise Such-Taktrate. Während der Übergangsphase wird der fremdgesteuerte Folgesensor auf die erwartete Flugbahn ausgerichtet, und zwar auch dann, wenn das Ziel sich zwar im Folgeraum befindet, aber vom Folgesensor noch nicht sensierbar ist. Sobald das Ziel sensierbar ist, wird es vom Folgesensor erfasst, wodurch die Übergangsphase beziehungsweise die Fremdsteuerung des Folgesensors beendigt ist. Der Folgesensor wird von nun an dem Ziel autark nachgeführt beziehungsweise folgt dem Ziel autark. Während der Übergangsphase ist zwar das Ziel durch den Folgesensor nicht direkt sensierbar, aber der Folgesensor folgt dennoch, in einer Weise, die als ,blind' bezeichnet werden kann, dem Ziel, mindestens annähernd im Rahmen der möglichen Genauigkeit, die unter Anderem durch die Extrapolation bestimmt ist. Ein nochmaliges Suchen des Zieles, diesmal durch den Folgesensor, erübrigt sich. Der Folgesensor ist im Moment, in dem das Ziel direkt durch ihn sensierbar wird, schon auf das Ziel ausgerichtet. In der Praxis wird meist ein Zielpunkt, auf den der Folgesensor ausgerichtet ist, und die Zielpunkt-Umgebung mit Hilfe einer Visualisierungseinheit (z.B. in Form eines Monitors) dargestellt, wobei üblicherweise eine Anordnung gewählt wird, bei welcher der Zielpunkt die Monitormitte einnimmt. Beim neuen Verfahren erscheint das Ziel dann, wenn es durch den Folgesensor direkt sensierbar ist, in unmittelbarer Nähe des Zielpunktes (oder innerhalb eines Gates, das auf dem Monitor dargestellt wird); das Ziel würde dann genau um Zielpunkt erscheinen, wenn die tatsächliche Flugbahn mit der extrapolierten Flugbahn zusammenfallen würde und sich auch sonst keine unkompensierten Fehler bemerkbar machen würden. Zur systeminternen Übertragung der im Zusammenhang mit dem neuen Verfahren benutzten Daten verfügt das Zielverfolgungssystem über die übliche geeignete Übertragungsmittel. Ergänzend sei noch bemerkt, dass die jeweiligen Daten natürlich laufend beziehungsweise taktweise unter Berücksichtigung der jeweils neuesten Ziel-Informationen aktualisiert werden.

Die mit der Erfindung erzielten Vorteile sind im Wesentlichen die Folgenden: Ein Operateur am Folgesensor muss weder manuelle Suchbewegungen durchführen noch automatische Suchbewegungen auslösen, solange auf dem Monitor des Folgesensors kein Ziel erscheint; Gründe dafür, dass kein Ziel erscheint, können die Folgenden sein: das Ziel ist noch nicht im Folgeraum beziehungsweise zu klein; das Ziel ist zwar im Folgeraum aber die Sicht auf das Ziel ist abgedeckt oder wegen atmosphärischer Absorption nicht erkennbar. Spätestens wenn das Ziel den Folgeraum erreicht, agiert Folgesensor, mit Hilfe der Fremdsteuerung, wie wenn er das Ziel erfassen würde, obwohl er ,zielblind' ist; der Folgesensor kann ggfs. auch auf das Ziel beziehungsweise die vermutete Flugbahn ausgerichtet werden, bevor das Ziel den Folgeraum erreicht. Die Erfassung des Zieles ist jedenfalls immer dann gesichert, wenn der Suchsensor ein Ziel gefunden hat. Der Operateur kann sich also darauf konzentrieren, das Ende der Übergangsphase und damit das Erscheinen des Zieles auf dem Monitor abzuwarten, um anschliessend optisch/manuell oder automatisch den Folgesensor dem Ziel nachzuführen. Auch nach einer längeren 'blinden' Zielverfolgung kann anschliessend das dann vom Folgesensor direkt sensierbare Ziel rasch verfolgt und ggfs. rasch bekämpft werden, in jedem Fall bedeutend rascher als bei der herkömmlichen Verwendung der Flugbahn-Daten, die nur in der niedrigen ersten Taktrate beziehungsweise Such-Taktrate bereitgestellt wurden.

Es ist zur störungsfreien und effizienten Durchführung des neuen Verfahrens nicht erforderlich, dass der Suchsensor und der Folgesensor gleiche oder spezifisch aufeinander abgestimmte Suchcharakteristiken aufweisen. Dies hat den Vorteil, dass unterschiedliche Sensoren, beispielsweise von verschiedenen Waffensystemen, gemeinsam einsetzbar sind, indem sie zu einem effizient wirkenden Sensorverbund gekoppelt werden, wodurch der Wert jedes Sensors für die Bekämpfung von Zielen gesteigert. Dies ist besonders vorteilhaft, weil die Folgesensoren häufig Bestandteile von schon vorhandenen Waffensystemen sind, deren Effizienz durch Zusammenwirken mit Suchsensoren erhöht werden kann.

Insbesondere können der Suchsensor und der Folgesensor ungleiche Reichweiten aufweisen und/oder ungleiche weite Winkelräume abdecken, wobei im Allgemeinen der Suchsensor eine grössere Reichweite hat und meist auch einen weiteren Winkelraum absuchen kann.

In gewissen Fällen kann es vorteilhaft sein, einen Suchsensor mit mehreren unterschiedliche Fähigkeiten aufweisenden Suchsensor-Einheiten vorzusehen; die Suchsensor-Einheiten können zum Beispiel für verschiedene, sich im Allgemeinen aber leicht überschneidende Teil-Suchräume zuständig sind, oder sie können für denselben Suchraum aber bei unterschiedlichen Sichtbeziehungsweise Detektionsverhältnissen zuständig sein; hierzu gehören nicht nur unterschiedliche Bedingungen im Raum zwischen Sensor und Ziel sondern auch unterschiedliche Eigenschaften des Zieles, die zu unterschiedlichen Detektionsergebnissen führen.

Häufig werden als Suchsensor ein Radarsensor und als Folgesensor zum Beispiel ein Infrarotsensor, vorzugsweise ein FLIR-Sensor, oder eine TV-Kamera oder eine optische Visierlinie, benutzt.

Der Folgesensor ist vorzugsweise so ausgebildet, dass er vollständig unabhängig von der direkten Erfassbarkeit des Zieles durch ihn selbst automatisch auf das Ziel ausrichtbar ist, ggfs. auch dann, wenn sich dieses noch nicht im vom Folgesensor sensierbaren Raum befindet.

Die Nachführmittel des Folgesensors können zur manuellen oder automatischen Nachführung des Folgesensors ausgebildet sein. Vorteilhaft sind Folgesensoren, die sich sowohl automatisch wie auch manuell nachführen lassen, so dass ein Ausfall der Nachführ-Automatik nicht den Ausfall des gesamten Folgesensors zur verursacht.

Das neue Verfahren ist besonders geeignet in Fällen, in denen der Folgesensor räumlich getrennt vom Suchsensor, aber natürlich in einer bekannten Relativlage zum Suchsensor, angeordnet ist. Zur Erzielung präziser Ergebnisse muss die Relativlage hierbei in die Berechnungen einbezogen werden. Häufig, aber nicht zwingend, sind Suchsensoren ortsgebunden und Folgesensoren mobil. Suchsensoren können Bestandteile von aufwändigen ortsgebundenen Frühwarnsystemen bilden, während Folgesensoren Bestandteile von oft nicht ortsgebundene Feuerleitgeräten oder Waffenträgern von Waffensystemen bilden können.

Zur Ermittlung der jeweiligen Relativlagen können der Suchsensor und/oder der Folgesensor mit entsprechenden Suchmitteln ausgerüstet sein.

Die Berechnungsmittel, welche im Zusammenhang mit der Durchführung des Verfahrens erforderlich sind, können durch einzelne Berechnungseinheiten gebildet sein. Solche Berechnungseinheiten können dem Suchsensor wie auch dem Folgesensor zugeordnet sein. Im Allgemeinen verfügen sowohl der Suchsensor wie auch der Folgesensor und häufig auch Zusatzsysteme wie Waffenträger über spezifisch ausgebildete Berechnungseinheiten.

In vielen Fällen weist das Zielverfolgungssystem nur einen Suchsensor, aber mehr als einen Folgesensor auf. Befindet sich ein weiterer Folgesensor in einer anderen Relativlage zum Suchsensor als der erstgenannte Folgesensor, so sind für den weiteren Folgesensor weitere Flugbahn-Daten bereitzustellen, die die andere Relativlage des weiteren Folgesensors berücksichtigen.

Mit Hilfe von Kommunikationsmitteln können Flugbahn-Daten oder weitere verfahrenswesentliche spezifische an ein Zusatzsystem übertragen werden. Das Zusatzsystem kann beispielsweise ein Waffenträger, insbesondere ein Geschütz oder ein Raketenwerfer, sein. Der Waffenträger kann auch mobil sein. Häufig werden Waffenrohre von Geschützen beziehungsweise die entsprechenden Servos mit Hilfe von Folgesensoren gesteuert. Die Waffenträger schiessen in diesem Zusammenhang auch als Waffen bezeichnete Projektile ab, die, häufig in Fragmenten, das Ziel treffen sollen. Die Daten müssen hierbei die Relativlage des Waffenträgers zum Folgesensor berücksichtigen, und es muss zum Steuern des Waffenrohres eine Vorhalterechnung durchgeführt werden, die insbesondere das Flugverhalten beziehungsweise die Ballistik der Projektile berücksichtigt.

In einer besonders vorteilhaften Ausführung kann der Suchsensor auch so ausgebildet sein, dass er Ziel-Informationen von nicht nur einem sondern von mehreren Zielen ermitteln kann. Die Ziel-Informationen, die unterschiedliche Ziele betreffen, werden dann mit Hilfe der Berechnungsmittel, die hierfür eine spezifische Intelligenz aufweisen, verwertet und für verschiedene Folgesensoren bereitgestellt.

Es ist üblich, dass die Folgesensoren Filtermittel besitzen, und es ist ein besonderer Vorteil der Erfindung, dass solche Filter unter Berücksichtigung der Flugbahn-Daten voreingestellt werden können.

Praktisch ist es unvermeidlich, das neue Zielverfolgungssystem so auszubilden, dass bei der Durchführung des neuen Verfahrens keine systembedingten Zeitverzögerungen eintreten. Um Fehler zu vermeiden, die durch solche Zeitverzögerungen verursacht werden, ist es vorteilhaft, die Berechnungen unter Berücksichtigung der Zeitverzögerungen so durchzuführen, dass eine Kompensation stattfindet, um die Nachführung des Folgesensors in präziser Weise durchzuführen.

Weitere Einzelheiten und Vorteile der Erfindung werden im Folgenden an Hand eines Ausführungsbeispiels und mit Bezug auf die Zeichnung beschrieben. Es zeigt:
- Fig. 1: ein erstes Zielverfolgungssystem nach der Erfindung, in einer schematischen Darstellung, welche auch die Durchführung des Verfahrens nach der Erfindung darstellt; und
- Fig. 2: ein zweites Zielverfolgungssystem nach der Erfindung, mit welchem Zusatzsysteme gekoppelt sind.

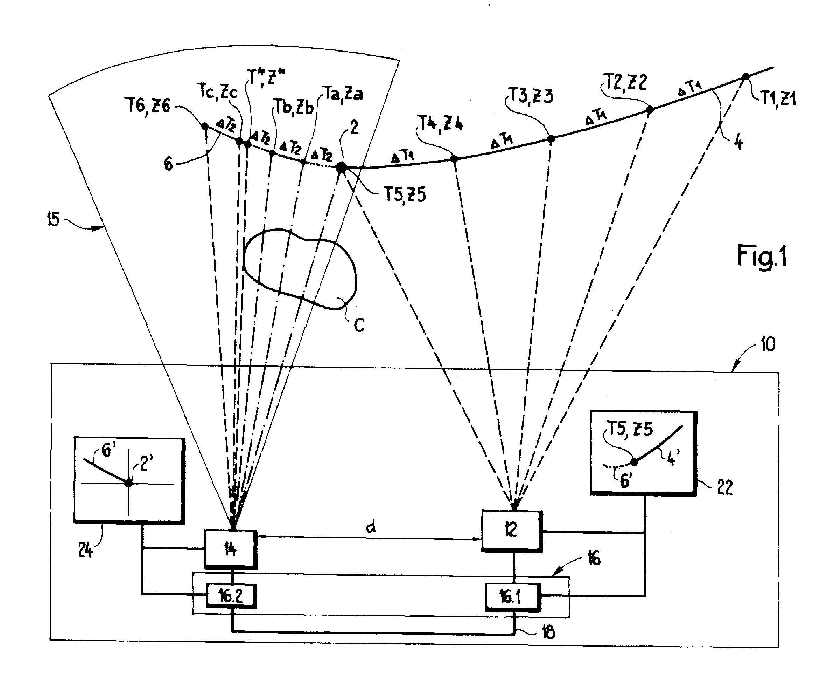

In Fig. 1 ist ein sich in einem Luftraum bewegendes Ziel 2 zu einem Zeitpunkt T5 an einem Ort Z5 dargestellt. Das Ziel 2 hat bereits eine Spur 4 durchflogen. Auf Grund einer Extrapolation, basierend auf der Spur 4, wird erwartet, dass das Ziel 4 auf einer Flugbahn 6, punktiert dargestellt, weiter fliegen wird.

Das Ziel 2 wird mit Hilfe eines Zielverfolgungssystems 10 nach der Erfindung verfolgt. Das Zielverfolgungssystem 10 weist einen Suchsensor 12, einen Folgesensor 14, Berechnungsmittel 16 und Übertragungsmittel 18 auf. Der Suchsensor 12 deckt einen weiten Suchraum ab, dessen Begrenzung nicht dargestellt ist. Der Folgesensor 14 deckt einen Folgeraum 15 ab.

Der Suchsensor 12, der im vorliegenden Fall ein Suchradar aufweist und rotierend wirksam ist, sucht seinen Suchraum in einer Vielzahl von Durchgängen beziehungsweise Rotationen ab, die sich in zeitlichen Abständen ΔT1 folgen, die nicht konstant sein müssen, und die einer ersten beziehungsweise Such-Taktrate von 2π/ΔT1 entsprechen, die ebenfalls nicht konstant sein muss.

Der Folgesensor 14 ist örtlich getrennt mit einer Ablage d vom Suchsensor 12 angeordnet. Die vektorielle Ablage d des Folgesensors 14 vom Suchsensor 12 und damit auch die Relativlage des Folgesensors 14 zum Suchsensor 12 sind bekannt. Dem Suchsensor 12 ist im Weiteren eine Visualisierungseinheit 22 und dem Folgesensor 14 eine Visualisierungseinheit 24 zugeordnet.

Die Berechnungsmittel 16 umfassen eine erste Berechnungseinheit 16.1, die dem Suchsensor 12 zugeordnet ist, und eine zweite Berechnungseinheit 16.2, die dem Folgesensor 14 zugeordnet ist.

Die Übertragungsmittel 18 dienen zur systeminternen Übertragung von Daten, insbesondere zwischen dem Suchsensor 12, den Berechnungseinheiten 16.1, 16.2 der Berechnungsmittel 16 und dem Folgesensor 14. Die Übertragungsmittel können leitergebundene und/oder leiterlose Übertragungseinheiten umfassen.

Es sei noch erwähnt, dass gestrichelte Linien zwischen dem Suchsensor 12 und der Spur 4 sowie zwischen dem Folgesensor 14 und der Flugbahn 6 ein sensieren des Zieles 2 symbolisieren, während die strichpunktierten Linien zwischen dem Folgesensor 14 und der Flugbahn 6 die jeweilige Ausrichtung des fremdgesteuerten Folgesensors 14 in der Übergangsphase symbolisieren.

In einem Zeitpunkt T1 hatte der Suchsensor 12 das Ziel 2 am Ort Z1 geortet. Daraufhin wurde das Ziel 2 im Zeitpunkt T2 bei Z2, im Zeitpunkt T3 bei Z3 und im Zeitpunkt T4 bei Z4 geortet. Im Zeitpunkt T5 befindet sich das Ziel 2, wie schon beschrieben, bei Z5. In jedem der Zeitpunkte Z1 bis Z5 wurden beziehungsweise werden vom Suchsensor 12 Ziel-Informationen ermittelt. Diese Ziel-Informationen beschreiben im Wesentlichen, genau genommen interpoliert, die Spur 4. Aus den ermittelten Ziel-Informationen extrapolieren die Berechnungsmittel 16 die erwartete Flugbahn 6 beziehungsweise stellen Flugbahn-Daten bereit, die diese erwartete Flugbahn 6 im Bereich zwischen Z5 und Z6 beschreiben.

Die Extrapolation der Flugbahn 6 erfolgt durch die Berechnungsmittel 16, und die entsprechenden Flugbahn-Daten werden mit Hilfe der Übertragungsmittel 18 an den Folgesensor 14 übertragen bzw. für diesen bereitgestellt.

Die Extrapolation der Flugbahn 6 kann mittels der Berechnungseinheit 16.1 oder mittels der Berechnungseinheit 16.2 erfolgen; erfolgt die Extrapolation der Flugbahn 6 erst und erst durch die Berechnungsmittel 16.2, so werden die durch die Uebertragungsmittel 18 übertragenen Daten in einer Taktrate übertragen, welche der Such-Taktrate 2π/ΔT1 gleich ist; die Uebertragungsmittel 18 sind dadurch weniger belastet als bei einer Uebertragung von Daten in einer zweiten Taktrate 2π/ΔT2, die höher ist als die Such-Taktrate 2π/ΔT1, in welcher die Flugbahn-Daten erfindungsgemäss für den Folgesensor 14 bereitgestellt werden.

Der höheren Taktrate entspricht ein Zeitintervall ΔT2, das nur ein Bruchteil des Zeitintervalls ΔT1 ist. In der Darstellung gemäss Fig. 1 liegt die Relation der Zeitintervalle ΔT1/ΔT2 bei Vier; diese Relation der Zeitintervalle und damit die inverse Relation der Taktraten ist nur gewählt, um die Zeichnung übersichtlich zu gestalten.

Die Flugbahn 6 zeigt die erwartete Bewegung des Zieles nach dem Zeitpunkt T5. Im Zeitintervall zwischen dem Zeitpunkt T5 und dem Zeitpunkt T6 wandert das Ziel 2, ausgehend von Z5, voraussichtlich nach Z6, wobei es in den Zeitpunkt Ta, Tb und Tc mindestens annähernd bei Za beziehungsweise Zb beziehungsweise Zc erwartet werden kann. Im Zeitpunkt T5 beginnt die Übergangsphase; das Ziel 2 hat zwar einen vom Folgesensor 14 abdeckbaren Folgeraum 15 erreicht, kann aber vom Folgesensor 14 noch nicht sensiert beziehungsweise erfasst werden. Daher ist es unmöglich, dass der Folgesensor 14 dem Ziel 2 autark nachgeführt wird beziehungsweise dem Ziel 2 autark folgt.

Es gibt zahlreiche Gründe dafür, dass der Folgesensor 14 das Ziel 2 nicht erfassen kann, obwohl es sich zweifelsfrei im Folgeraum 15 befindet; zum Beispiel kann das Ziel 2 zu klein oder durch ein Hindernis, in Fig. 1 lediglich beispielsweise als Wolke C dargestellt, verdeckt sein, oder die Licht-oder Atmosphärenverhältnisse lassen nicht zu, dass das Ziel 2 vom Folgesensor 14 sensierbar ist. Der Folgesensor 14 wird erfindungsgemäss während der Übergangsphase unter Verwertung der Flugbahn-Daten fremdgesteuert, wobei er durch seine Ausrichtmittel auf den jeweiligen Ort ausgerichtet wird, an dem sich das Ziel 2 erwartungsgemäss gerade befindet. Dadurch wird der Folgesensor 14 in die Lage versetzt, dem Ziel 2 gewissermassen ,blind' zu folgen. Zu den Zeitpunkten Ta und Tb ist der Folgesensor auf Punkte Za beziehungsweise Zb gerichtet, an denen sich das Ziel 2 jeweils gerade befindet, obwohl das Ziel 2 durch die Wolke C abgedeckt und für den Folgesensor 14 nicht sichtbar ist. Im Zeitpunkt Tc befindet sich das Ziel 2 dann am Punkt Zc und die Wolke C bildet keine Sichtbehinderung mehr zwischen dem Folgesensor 14 und dem Ziel 2. Die Übergangsphase, in der das Ziel 2 fremdgesteuert war, ist beendet, sobald das Ziel 2 zur Zeit T* den Ort Z* erreicht hat. Das Ziel 2 kann jetzt durch die Erfassungsmittel des Folgesensors 14 erfasst werden und die Nachführmittel führen den Folgesensor 14 dem Ziel 2 nach, mit anderen Worten, der Folgesensor 14 folgt nun dem Ziel 2 autark.

Auf der Visualisierungseinheit 24 des Folgesensors 14 erscheint zum Zeitpunkt T* das Ziel 2, genauer ein Bild 2' des Zieles 2, in einem Zielpunkt, der durch den Origo eines Koordinatennetzes gebildet wird; hierbei ist allerdings angenommen, dass die vom Ziel 2 nach dem Zeitpunkt T5 tatsächlich durchflogene Spur mit der extrapolierten Flugbahn 6 übereinstimmt, und dass das Verfahren insgesamt ideal abläuft oder dass sich eventuelle Fehler kompensieren. Verläuft die Nachführung des Folgesensors 14 vom Zeitpunkt T* an ideal, so bleibt das Bild 2' des Zieles 2 immer im Zielpunkt beziehungsweise im Ursprung des Koordinatennetzes. Würde der Folgesensor 14 dem Ziel 2 vom Zeitpunkt T* an nicht nachgeführt, so würde das Bild 2' des Zieles 2 längs dem Bild 6' der Flugbahn 6 wandern, wie dies ebenfalls in Fig. 1 dargestellt ist. Es wäre auch möglich, fiktive Bilder des Zieles 2 beziehungsweise Zielmarken einzublenden, welche den tatsächlichen Ort Z5 des Zieles 2 zum Zeitpunkt T5 und die erwarteten Orte des Za und Zb des Zieles 2 zu den Zeitpunkten Ta und Tb wiedergeben; bei solchen Zielmarken Y5, Ya und Yb würde es aber nicht um Bilder 2' beziehungsweise Abbildungen des Zieles 2 sondern um eine Fiktion handeln.

Die Visualisierungseinheit 22 des Suchsensors 12 zeigt die Spur 4 der Vergangenheit und die erwartete Flugbahn 6 des Ziels 2.

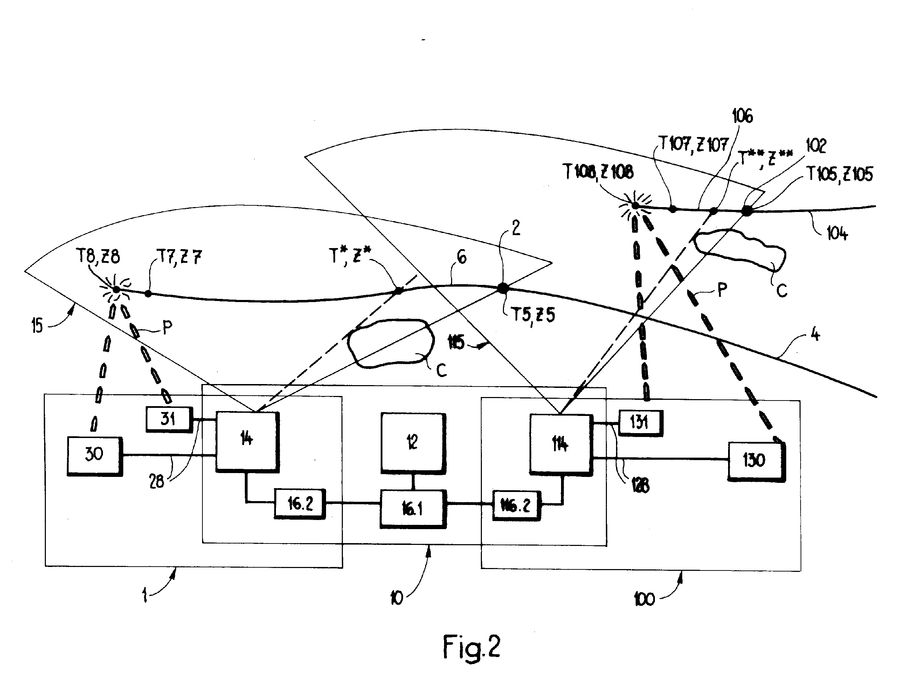

Fig. 2 zeigt ein zweites Zielverfolgungssystem 10 nach der Erfindung, mit einem Suchsensor 12, der dazu ausgebildet ist, nicht nur vom Ziel 2 sondern auch von einem Zweit-Ziel 102 Ziel-Informationen zu ermitteln. Die Ziele 2 und 102 sind auf ihren Spuren 4 bzw. 104 dargestellt. Die Berechnungseinheit 16.1 ist dazu ausgebildet, die Ziele 2 und 102 zu Weiterverfolgung zuzuteilen, wobei sie das Ziel 2 dem Folgesensor 14 und das Ziel 102 einem weiteren Folgesensor 114 zuteilt. Ist kein Zweit-Ziel vorhanden, so kann das einzige Ziel 2 beiden Folgesensoren 14, 114 zugeteilt werden. Das Zielverfolgungssystem 10 weist zusätzlich zur Berechnungseinheit 16.2 eine weitere, dem weiteren Folgesensor 114 zugeordnete Berechnungseinheit 116.2 auf. Der Folgesensor 14 hat einen Folgebereich 15 und der Folgesensor 114 einen Folgebereich 115, die sich teilweise überschneiden. Mit dem Folgesensor 14 sind über Kommunikationsmittel 28 zwei Zusatzsysteme 30, 31 gekoppelt, entsprechend sind mit dem Folgesensor 114 über Kommunikationsmittel 128 Zusatzsysteme 130, 131 gekoppelt. Die Zusatzsysteme sind im Allgemeinen Waffenträger, mit deren Waffen beziehungsweise Projektilen P die Ziele 2, 102 zu bekämpfen sind. Es kann auch gesagt werden, dass die Folgesensoren 14 und 114 zusammen mit ihren zugehörigen Zusatzsystemen 30, 31 beziehungsweise 130, 131 zwei Waffensysteme 1 beziehungsweise 100 bilden.

Der folgende Teil der Beschreibung ist vereinfacht und summarisch, die mit Bezug auf Fig. 1 beschriebenen verfahrens- und systemspezifischen Einzelheiten der Erfindung treffen aber auch auf Fig. 2 zu.

Das Ziel 2 wurde dem Folgesensor 14 zugeteilt und hat im Zeitpunkt T5 den Folgeraum 15 erreicht; in der Übergangsphase bis zum Zeitpunkt T* folgt der Folgesensor 14 ferngesteuert und ,blind' dem Ziel 2, solange, bis das Ziel 2 bei Z* vom Folgesensor 14 sensierbar und danach autark verfolgbar ist. In einem Zeitpunkt T7 hat das Ziel 2 den Ort Z7 und damit einen zu seiner Bekämpfung günstigen Raum erreicht. In einem Zeitpunkt T8 wird das Ziel 2 den Ort Z8 erreicht haben. Die zur Bekämpfung des Zieles 2 bestimmten Projektile P werden, auf Grund einer üblichen Vorhalterechnung, im Zeitpunkt P7 abgeschossen, aber nicht auf den Ort P7 sondern auf den Ort P8, wo im Zeitpunkt T8 das Ziel 2 mit den Projektilen P zusammentrifft. Die Flugbahn 6 endet daher bei Z8.

Das Zweit-Ziel 102 wurde dem Folgesensor 114 zugeteilt und hat im Zeitpunkt T105 den Folgeraum 115 erreicht; in einer Übergangsphase bis zum Zeitpunkt T** folgt der Folgesensor 114 ferngesteuert und ,blind' dem Zweit-Ziel 102, solange, bis das Zweit-Ziel 102 vom Folgesensor 114 sensierbar und danach autark verfolgbar ist. Das Zweit-Ziel 102 wird dann in analoger Weise wie das Ziel 2, jedoch von den Projektilen der Zusatzsysteme 130, 131 bekämpft. Die Flugbahn 106 endet bei Z108.

## Patentansprüche

1. Verfahren zum Verfolgen eines sich in einem Luftraum bewegenden Zieles (2), wobei
- mit Hilfe eines Suchsensors (12) ein Suchraum in mehreren Durchgängen in einer ersten Taktrate (2π/ΔT1) abgesucht und hierbei Ziel-Informationen ermittelt werden, welche eine vom Ziel (2) durchflogene Spur (4) beschreiben,
- mit Hilfe von Berechnungsmitteln (16) eine erwartete Flugbahn (6) aus den ermittelten Ziel-Informationen von mindestens zwei Durchgängen extrapoliert und für einen Folgesensor (14), der einen Folgeraum (15) abdeckt, Flugbahn-Daten, welche die erwartete Flugbahn (8) beschreiben, bereitgestellt werden,
- mit Hilfe von Übertragungsmitteln (18) die Flugbahn-Daten, welche die extrapolierte erwartete Flugbahn (8) beschreiben, an den Folgesensor (14) übertragen werden in einer zweiten Taktrate (2π/ΔT2), die höher ist als die erste Taktrate (2π/ΔT1), und
wenn das Ziel (2) den Folgeraum (15) erreicht,
- mit Hilfe von Ausrichtmitteln der Folgesensor (14) anhand der übertragenen Flugbahn-Daten unabhängig von der Erfassbarkeit des Zieles (2) auf die erwartete Flugbahn (6) ausgerichtet wird,
- mit Hilfe von Erfassungsmitteln das Ziel (2) erfasst wird, sobald es durch den Folgesensor (14) erfassbar ist, und
- mit Hilfe von Nachführmitteln der Folgesensor (14) dem Ziel autark nachgeführt wird.

2. Verfahren nach Anspruch 1, wobei
der Suchsensor (12) und der Folgesensor (14) verschiedene Suchcharakteristiken aufweisen.

3. Verfahren nach einem der Ansprüche 1 bis 2, wobei
- der Folgesensor (14) räumlich getrennt vom Suchsensor (12) in einer bekannten Relativlage zum Suchsensor (12) angeordnet wird, und
- die Berechnung der Flugbahn-Daten unter Berücksichtigung der bekannten Relativlage des Folgesensors (14) zum Suchsensor (12) durchgeführt wird.

4. Verfahren nach einem der Ansprüche 1 bis 3, wobei
Verarbeitungen von Daten mindestens zum Teil durch eine dem Suchsensor (12) zugeordnete Berechnungseinheit (16.1) oder durch eine dem zu Folgesensor (14) zugeordnete Berechnungseinheit (16.2) der Berechnungsmittel (16) durchgeführt werden.

5. Verfahren nach einem der Ansprüche 1 bis 4, wobei
die Relativlage des Folgesensors (14) zum Suchsensor (12) mit Hilfe von Suchmitteln ermittelt wird, die dem Suchsensor (12) und/oder dem Folgesensor (14) zugeordnet sind.

6. Verfahren nach einem der Ansprüche 1 bis 5, wobei
- mit Hilfe der Berechnungsmittel (16) weitere Flugbahn-Daten für einen weiteren Folgesensor (114) berechnet werden, und
- mit Hilfe der Übertragungsmittel die weiteren Flugbahn-Daten dem weiteren Folgesensor (114) übertragen werden.

7. Verfahren nach einem der Ansprüche 1 bis 6, wobei
mit Hilfe von Kommunikationsmitteln (28, 128) eine Übermittlung der Flugbahn-Daten oder von auf den Flugbahn-Daten beruhenden Daten an ein Zusatzsystem (30, 31; 130, 131) durchgeführt wird.

8. Verfahren nach einem der Ansprüche 1 bis 7, wobei
- mit Hilfe des Suchsensors (12) der Suchraum nach einem Zweit-Ziel (102) abgesucht und hierbei Zweitziel-Informationen ermittelt werden, welche eine vom Zweitziel durchflogene Zweit-Spur (104) beschreiben,
- mit Hilfe der Berechnungsmittel (16) erwartete Zweit-Flugbahn-Daten (106) zur Verwertung durch mindestens einen Folgesensor (114) und mindestens ein Zusatzsystem (130, 131) bereitgestellt werden.

9. Verfahren nach einem der Ansprüche 1 bis 8, wobei
Unter Berücksichtigung der Flugbahn-Daten Filtermittel des Folgesensors (14) voreingestellt werden.

10. Verfahren nach einem der Ansprüche 1 bis 9, wobei
die Berechnung der Flugbahn-Daten unter Berücksichtigung von systembedingten Zeitverzögerungen erfolgt.

11. Zielverfolgungssystem (10) zum Verfolgen eines sich in einem Luftraum bewegenden Zieles (2),
- mit einem Suchsensor (12), der dazu ausgelegt ist, einen Suchraum in mehreren Durchgängen mit einer ersten Taktrate (2π/ΔT1) abzusuchen, und
- mit einem Folgesensor (14), der dazu ausgelegt ist, in einem Folgeraum (15) dem Ziel (2) zu folgen, wobei
der Suchsensor (12) aufweist:
- erste Erfassungsmittel, die dazu ausgebildet sind, bei mindestens einigen der Durchgänge Ziel-Informationen zu erfassen, welche eine vom Ziel (2) durchflogene Spur (4) beschreiben;
das Zielverfolgungssystem (10) aufweist:
- Berechnungsmittel (16, 16.1, 16.2), die dazu ausgebildet sind, aus den Ziel-Informationen eine erwartete Flugbahn (6) des Ziels (2) zu extrapolieren und Flugbahn-Daten, welche die erwartete Flugbahn (6) beschreiben, zu berechnen und
- Übertragungsmittel (18), die dazu ausgebildet sind, mindestens die Ziel-Informationen enthaltenden Daten an die Berechnungsmittel (16, 16.1, 16.2) und mindestens die Flugbahn-Daten, welche die extrapolierte Flugbahn beschreiben, an den Folgesensor (14) zu übertragen, um die Flugbahn-Daten für den Folgesensor (14) in einer zweiten Taktrate (2π/ΔT2) bereitzustellen, die höher ist als die erste Taktrate (2π/ΔT1); und wobei
der Folgesensor (12) aufweist:
- Ausrichtmittel, die dazu ausgebildet sind, den Folgesensor (12) an Hand der bereitgestellten Flugbahn-Daten und unabhängig von der Erfassbarkeit des Zieles (2) auf die erwartete Flugbahn (6) auszurichten,
- zweite Erfassungsmittel, die dazu ausgebildet sind, das Ziel (2) zu erfassen, sobald es den Folgeraum (15) erreicht und erfassbar ist, und
- Nachführmittel, die dazu ausgebildet sind, den Folgesensor (12) dem erfassten Ziel (2) autark nachzuführen, sobald es von den Erfassungsmitteln erfasst ist.

12. Zielverfolgungssystem (10) nach Anspruch 11, wobei
der Suchsensor (12) und der Folgesensor (14) verschiedene Suchcharakteristiken aufweisen.

13. Zielverfolgungssystem (10) nach einem der Ansprüche 11 bis 12, wobei der Suchsensor (12) eine Suchcharakteristik mit einer grösseren Reichweite aufweist als der Folgesensor (14).

14. Zielverfolgungssystem (10) nach einem der Ansprüche 11 bis 13, wobei der Suchsensor (12) eine Suchcharakteristik mit einem Suchraum aufweist, der weiter ist als der Folgeraum (15) des Folgesensors (14).

15. Zielverfolgungssystem (10) nach einem der Ansprüche 1 bis 14, wobei der Suchsensor (12) mehrere Sucheinheiten aufweist.

16. Zielverfolgungssystem (10) nach einem der Ansprüche 11 bis 15, wobei der Suchsensor (12) mindestens einen Radarsensor aufweist.

17. Zielverfolgungssystem (10) nach einem der Ansprüche 11 bis 16, wobei die Erfassungsmittel des Suchsensors (12) dazu ausgebildet sind, aus den Ziel-Informationen eine Spur des Ziels (2) im Raum zu erfassen.

18. Zielverfolgungssystem (10) nach einem der Ansprüche 11 bis 17, wobei der Folgesensor (14) ein Infrarotsensor, vorzugsweise ein FLIR-Sensor ist.

19. Zielverfolgungssystem (10) nach einem der Ansprüche 11 - 18, wobei der Folgesensor (14) so ausgebildet ist, dass er durch die Ausrichtmittel unabhängig von der selbsttätigen Erfassung des Zieles (2) automatisch auf die erwartete Flugbahn (6) ausrichtbar ist.

20. Zielverfolgungssystem (10) nach einem der Ansprüche 11 bis 19, wobei die Nachführmittel zum autarken Nachführen des Folgesensors (14) zur manuellen und/oder automatischen Nachführung des Folgesensors (14) ausgebildet sind.

21. Zielverfolgungssystem (10) nach einem der Ansprüche 11 bis 20, wobei der Folgesensor (14) ortsungebunden ist.

22. Zielverfolgungssystem (10) nach einem der Ansprüche 11 bis 21, wobei
- der Folgesensor (14) örtlich getrennt vom Suchsensor (12) und in einer bekannten Relativlage zum Suchsensor (12) angeordnet ist, und
- die Berechnungsmittel (16) dazu ausgebildet sind, die Flugbahn-Daten unter Berücksichtigung der Relativlage zu berechnen.

23. Zielverfolgungssystem (10) nach einem der Ansprüche 11 bis 22, wobei zur Ermittlung die Relativlage des Folgesensors (14) zum Suchsensor (12) der Suchsensor (12) und/oder der Folgesensor (14) Suchmittel besitzen.

24. Zielverfolgungssystem (10) nach einem der Ansprüche 11 bis 23, wobei mindestens ein Teil der Berechnungsmittel (16) eine dem Suchsensor (12) oder dem Folgesensor (14) zugeordnete Berechnungseinheit (16.1, 16.2) bilden.

25. Zielverfolgungssystem (10) nach einem der Ansprüche 11 bis 24, wobei
- die Berechnungsmittel (16) dazu ausgebildet sind, weitere Flugbahn-Daten für mindestens einen weiteren Folgesensor (114) zu berechnen, und
- die Übertragungsmittel dazu ausgebildet sind, die weiteren Flugbahn-Daten an den weiteren Folgesensor (114) zu übertragen.

26. Zielverfolgungssystem (10) nach einem der Ansprüche 11 bis 25, wobei der Folgesensor (14, 114) Kommunikationsmittel (28; 128) umfasst, die eine Übermittlung der Flugbahn-Daten an mindestens ein Zusatzsystem (30, 31; 130, 131) ermöglichen, wobei
- die relative Lage des mindestens einen Zusatzsystems (30, 31; 130, 131) zum Suchsensor (12) oder zum Folgesensor (14; 114) bekannt ist, und
- die Berechnungsmittel (16) dazu ausgebildet sind, Flugbahn-Daten zur Verwertung durch das mindestens eine Zusatzsystem (30, 31; 130, 131) zu berechnen.

27. Zielverfolgungssystem (10) nach Anspruch 26, wobei
das Zusatzsystem (30, 31; 130, 131) mindestens einen, vorzugsweise mobilen, Waffenträger wie ein Geschütz oder einen Raketenwerfer, aufweist.

28. Zielverfolgungssystem (10) nach einem der Ansprüche 11 bis 27, wobei der Suchsensor (12) dazu ausgebildet ist, seinen Suchraum nach einem Zweit-Ziel (102) abzusuchen und Zweit-Ziel-Informationen zu ermitteln.

29. Zielverfolgungssystem (10) nach einem der Ansprüche 11 bis 28, wobei der Folgesensor (14) Filtermittel aufweist, die unter Berücksichtigung der Flugbahn-Daten voreinstellbar sind.

30. Zielverfolgungssystem (10) nach einem der Ansprüche 11 bis 29, wobei die Berechnungseinheit (16) dazu ausgebildet ist, systembedingte Zeitverzögerungen in die Berechnung der Flugbahn-Daten einzubeziehen, um beim Nachführen des Folgesensors (14) die Zeitverzögerungen zu kompensieren.
